# EUROPÄISCHE PATENTSCHRIFT

(11) **EP 3 545 258 B1**
(45) Veröffentlichungstag und Bekanntmachung des Hinweises auf die Patenterteilung: **05.01.2022**
(21) Anmeldenummer: 17804539.9
(22) Anmeldetag: 24.11.2017
(51) Int. Cl.: G01B 11/06, G01B 11/245, G01B 11/25, G01B 21/04, G01B 5/00, G01S 7/481, G01S 7/497, G01S 17/48, G01C 3/00, G01C 25/00, B22D 2/00, B22D 11/16

(54) **VERFAHREN ZUR ABSTANDSMESSUNG BEI DER HERSTELLUNG VON PLATTEN ODER BANDMATERIALIEN**
METHOD FOR MEASURING DISTANCE DURING THE PRODUCTION OF SHEETS OR STRIP MATERIALS
PROCÉDÉ DE MESURE DE DISTANCE LORS DE LA PRODUCTION DE PLAQUES OU DE MATÉRIAUX EN BANDE

(30) Priorität: 25.11.2016 DE 102016122830
(43) Veröffentlichungstag der Anmeldung: 02.10.2019
(73) Patentinhaber: Nokra Optische Prüftechnik und Automation GmbH, 52499 Baesweiler (DE)
(72) Erfinder: LAUVEN, Günter, 52074 Aachen (DE); HELLMANN, Christian, 52146 Würselen (DE)
(74) Vertreter: Keenway Patentanwälte Neumann Heine Taruttis
(86) Internationale Anmeldenummer: PCT/EP2017/080419
(87) Internationale Veröffentlichungsnummer: WO 2018/096120

(56) Entgegenhaltungen:
- CN-A- 105 928 449
- RU-C1- 2 542 633
- US-A- 5 274 328
- US-A1- 2007 150 228
- US-A1- 2014 157 861
- US-B1- 6 466 305

## Beschreibung

Die Erfindung betrifft ein Verfahren zur Messung eines Abstands zwischen einem Sensor und einer Oberfläche bei der Herstellung von Platten oder Bandmaterialien. Außerdem betrifft die Erfindung ein Verfahren zur Kalibrierung eines entsprechenden Sensors bei der Herstellung von Platten oder Bandmaterialien.

Es sind Verfahren und Vorrichtungen bekannt, um Dicken von Bauteilen zu messen. Beispielsweise kann dazu mit einem Laser jeweils ein Abstand von einem Sensor zu der Unterseite des Bauteils und mit einem weiteren Laser ein Abstand von einem weiteren Sensor zu der Oberseite des Bauteils bestimmt werden. Ist der Abstand der Sensoren bekannt, kann daraus die Dicke des Bauteils bestimmt werden. Derartige Verfahren finden beispielsweise bei der Herstellung von Metallplatten Anwendung.

Die Genauigkeit solcher Abstandsmessungen ist dabei oft temperaturabhängig. Das bedeutet, dass die Messergebnisse nur bei einer bestimmten Temperatur verlässlich sind. Um eine hohe Messgenauigkeit zu gewährleisten, ist es daher als bekannt anzunehmen, die Sensoren regelmäßig durch aufwendige Maßnahmen auf eine bestimmte Temperatur zu bringen und innerhalb enger Grenzen auf dieser zu halten. Dies ist mit einem hohen apparativen Aufwand und einer komplexen Betriebsweise verbunden.

Auch aus verschiedenen anderen technischen Bereichen sind Verfahren zur Abstandsmessung bekannt, wie dies beispielsweise aus der US 5,274,328 A, der CN 105 928 449 A und der US 2007/150228 A1 hervorgeht.

Hiervon ausgehend ist es Aufgabe der hier vorliegenden Erfindung, die im Zusammenhang mit dem Stand der Technik geschilderten technischen Probleme zu lösen beziehungsweise zumindest zu verringern. Es sollen insbesondere ein Verfahren zur Messung eines Abstands zwischen einem Sensor und einer Oberfläche bei der Herstellung von Platten oder Bandmaterialien sowie ein Verfahren zur Kalibrierung eines entsprechenden

Sensors bei der Herstellung von Platten oder Bandmaterialien vorgestellt werden, mit denen insbesondere mit geringem Aufwand eine hohe Messgenauigkeit erzielt werden kann.

Diese Aufgaben werden gelöst mit den Merkmalen der unabhängigen Patentansprüche. Weitere vorteilhafte Ausgestaltungen sind in den jeweils abhängig formulierten Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden. Der Schutzbereich wird durch die unabhängigen Ansprüche definiert.

Erfindungsgemäß wird ein Verfahren zur Kalibrierung eines Sensors zur Messung eines Abstandes zwischen dem Sensor und einer Oberfläche vorgestellt. Das Verfahren wird bei der Herstellung von Platten oder Bandmaterialien eingesetzt und umfasst zumindest die folgenden Verfahrensschritte:
a) Bereitstellen einer ersten Kalibrierkurve als eine Funktion des Abstands zwischen dem Sensor und der Oberfläche in Abhängigkeit von zumindest einem Messsignal bei einer vorgegebenen und dieser ersten Kalibrierkurve zugeordneten ersten Temperatur;
b) Bereitstellen mindestens einer zweiten Kalibrierkurve als eine Funktion des Abstands zwischen dem Sensor und der Oberfläche in Abhängigkeit von zumindest einem Messsignal bei einer vorgegebenen und dieser zweiten Kalibrierkurve zugeordneten zweiten Temperatur, die sich von der ersten Temperatur und jeder anderen zweiten Temperatur unterscheidet;
c) Bestimmen mindestens einer dritten Kalibrierkurve aus den in Schritt a) und b) erhaltenen ersten und zweiten Kalibrierkurven des Sensors für mindestens eine dritte Temperatur, die von der ersten und jeder zweiten Temperatur verschieden ist.

Die Schritte a) bis c) werden bevorzugt, aber nicht notwendig in der angegebenen Reihenfolge durchlaufen.

Das beschriebene Verfahren kann insbesondere in Produktionsstraßen eingesetzt werden. Dabei kann es zu erheblichen Temperaturschwankungen kommen, beispielsweise von 0 °C bis 45 °C [Grad Celsius]. Erfindungsgemäß wird das beschriebene Verfahren bei der Herstellung von Platten oder Bandmaterialien, insbesondere aus Metall, Kunststoff, Carbon, Glas, Plexiglas, Polycarbonat oder Gewebe, eingesetzt.

Eine Kalibrierkurve gibt in der hier verwendeten Definition des Begriffs an, wie groß der Abstand zwischen dem Sensor und der Oberfläche bei einem bestimmten Messsignals des Sensors ist. Dabei ist eine Kalibrierkurve bevorzugt über einen Messbereich definiert. Das bedeutet, dass einem Messsignal innerhalb des Messbereichs jeweils ein Abstandswert insbesondere eindeutig zugeordnet ist. Die Kalibrierkurve kann dabei kontinuierlich definiert sein, so dass jedem beliebigen Wert des Messsignals ein Abstandswert zugeordnet ist. Alternativ kann die Kalibrierkurve auch diskret definiert sein. Das bedeutet, dass nur bestimmten Messsignalen jeweilige Abstandswerte zugeordnet sind.

Eine Kalibrierkurve ist bevorzugt eine eindimensionale Funktion des Abstands zwischen dem Sensor und der Oberfläche ausschließlich in Abhängigkeit von einem Messsignal. Das ist insbesondere dann bevorzugt, wenn der Sensor einen Punktlaser umfasst, mit dem der Abstand zwischen dem Sensor und einer einzelnen Messstelle der Oberfläche gemessen werden kann. Eine eindimensionale mathematische Funktion hat Funktionswerte, die von einer einzelnen Variable abhängen. Alternativ ist es aber auch bevorzugt, dass eine Kalibrierkurve eine zweidimensionale Funktion des Abstands zwischen dem Sensor und der Oberfläche in Abhängigkeit von einem Messsignal und weiterhin in Abhängigkeit von einer Messstelle auf der Oberfläche ist. Das ist insbesondere dann bevorzugt, wenn der Sensor einen Linienlaser umfasst, mit dem Abstände zwischen dem Sensor und der Oberfläche an einer Mehrzahl von verschiedenen Messstellen gleichzeitig gemessen werden können. Eine zweidimensionale mathematische Funktion hat Funktionswerte, die von zwei Variablen abhängen.

Eine Kalibrierkurve kann insbesondere durch eine Messung erstellt werden. Dazu wird bevorzugt ein Testkörper derart angeordnet, dass sich eine Oberfläche des Testkörpers in einem bekannten Abstand von dem Sensor befindet. Der Abstand kann beispielsweise mit einem normierten Längenmaßstab, einem Glasmaßstab oder einem Endmaß bestimmt werden. Bei einem Glasmaßstab handelt es sich um eine Vorrichtung zur Längenmessung aus Glas mit einer insbesondere sehr feinen Skalierung. Insbesondere auch aufgrund der geringen thermischen Ausdehnung von Glas kann der Abstand zwischen dem Sensor und der Oberfläche mit einem Glasmaßstab besonders genau auch bei verschiedenen Temperaturen bestimmt werden. Bei einem Endmaß kann es sich insbesondere um Blöcke aus einem Material wie beispielsweise Metall handeln, deren Ausdehnung bekannt ist.

Ein jeweiliges Messsignal des Sensors kann einem so gemessenen Abstand zugeordnet werden. Wird dies für eine Vielzahl von verschiedenen bekannten beziehungsweise bestimmten Abständen zwischen dem Sensor und der Oberfläche des Testkörpers wiederholt, erhält man eine diskrete Kalibrierkurve. Eine kontinuierliche Kalibrierkurve kann man beispielsweise durch Interpolation zwischen gemessenen Punkten erhalten. Auch kann über die gemessenen Punkte hinaus extrapoliert werden. Bei dem für das beschriebene Verfahren bevorzugt verwendeten Sensor ist davon auszugehen, dass die Kalibrierkurve keinen linearen Verlauf hat. Insbesondere eine theoretische Bestimmung der Kalibrierkurve kann schwierig sein, weil eine Vielzahl von bekannten und auch unbekannten Faktoren einen Einfluss auf den Verlauf der Kalibrierkurve haben kann.

Die Kalibrierkurven können insbesondere temperaturabhängig sein. Dabei kann die Temperaturabhängigkeit für verschiedene Abstände zwischen dem Sensor und der Oberfläche unterschiedlich ausgeprägt sein. Das bedeutet, dass die Kalibrierkurven bei unterschiedlichen Temperaturen unterschiedliche Verläufe haben, die sich qualitativ und nicht nur durch Skalierung unterscheiden können. Daher kann davon ausgegangen werden, dass eine von dem Messsignal unabhängige Temperaturkalibrierung allein nicht ausreicht, um den Temperatureinfluss auszugleichen. Daher wird gemäß dem beschriebenen Verfahren für eine Mehrzahl von Temperaturen jeweils eine Kalibrierkurve aufgenommen.

Es können dabei mehrere zweite Temperaturen mit jeweils einer eigenen zweiten Kalibrierkurve verwendet werden. Die erste Temperatur und alle zweiten Temperaturen sind bevorzugt jeweils unterschiedlich, so dass kein Temperaturwert mehrfach auftritt.

In Schritt a) wird die erste Kalibrierkurve für die erste Temperatur bevorzugt durch eine Messung aufgenommen. In Schritt b) wird die mindestens eine zweite Kalibrierkurve bei der mindestens einen zweiten Temperatur bevorzugt durch eine Messung aufgenommen. Wurden die Kalibrierkurven durch entsprechende Messungen erhalten, können sich Ungenauigkeiten von mit dem Sensor gemessenen Abstandswerten insbesondere auf Messungenauigkeiten beschränken.

Durch die Schritte a) und b) wird eine Mehrzahl von Kalibrierkurven erhalten. Bevorzugt werden die Kalibrierkurven durch entsprechende Messungen aufgenommen. Alternativ ist es aber auch bevorzugt, dass bereits bekannte Kalibrierkurven verwendet werden. Beispielsweise kann aus einer vorherigen Kalibration bereits eine Kalibrierkurve bekannt sein, die als die erste Kalibrierkurve verwendet werden kann.

Insbesondere, um aus einem Messsignal einen Abstandswert auch bei einer solchen Temperatur bestimmen zu können, die nicht mit der ersten oder einer der mindestens einen zweiten Temperatur übereinstimmt, wird Schritt c) durchgeführt. Dabei wird für die dritte Temperatur, die von der ersten Temperatur und von allen zweiten Temperaturen verschieden ist, die dritte Kalibrierkurve bestimmt. Das kann insbesondere durch ein mathematisches Verfahren erfolgen. Dazu ist es bevorzugt, dass der Sensor eine Steuereinheit mit einer entsprechenden Software umfasst. Alternativ ist es bevorzugt, dass eine entsprechende Steuereinheit außerhalb des Sensors angeordnet und mit dem Sensor verbunden ist. Unter einer Steuereinheit ist hier jede Gesamtheit von Bauteilen zu verstehen, die die für die Steuereinheit beschriebene Funktionalität ermöglichen. Dabei ist es zwar bevorzugt, aber nicht notwendig, dass alle Bauteile der Steuereinheit in einem gemeinsamen Gehäuse der Steuereinheit angeordnet sind. Insbesondere ist es auch möglich, dass ein Teil der Steuereinheit innerhalb des Sensors und ein anderer Teil der Steuereinheit außerhalb des Sensors angeordnet ist.

Es ist bevorzugt, dass mindestens eine dritte Kalibrierkurve in der Steuereinheit hinterlegt wird. Alternativ oder zusätzlich kann die Steuereinheit geeignet und bestimmt sein, eine dritte Kalibrierkurve zu bestimmen, insbesondere basierend auf der ersten Kalibrierkurve und mindestens einer zweiten Kalibrierkurve.

Die mindestens eine dritte Kalibrierkurve unterscheidet sich von der ersten Kalibrierkurve und von der mindestens einen zweiten Kalibrierkurve dadurch, dass die dritte Kalibrierkurve nicht durch eine Messung erhalten wird. Mögliche Ungenauigkeiten können nicht nur durch in der Messmethodik begründete Messungenauigkeiten bedingt sein. Auch ist es möglich, dass die mathematische Bestimmung der dritten Kalibrierkurve fehlerbehaftet ist, so dass die für eine bestimmte Temperatur berechnete Kalibrierkurve nicht unbedingt mit einer gemessenen Kalibrierkurve für diese Temperatur übereinstimmt. Daher ist es bevorzugt, dass die dritte Temperatur möglichst nah an der ersten Temperatur und/oder an einer der zweiten Temperaturen liegt. In diesem Fall kann davon ausgegangen werden, dass die Unterschiede zwischen den entsprechenden Kalibrierkurven klein sind, so dass mit der mathematischen Bestimmung der dritten Kalibrierkurve nur ein kleiner Bereich zwischen zwei Kalibrierkurven überbrückt werden muss. Insbesondere ist es bevorzugt, dass die dritte Temperatur zwischen der ersten Temperatur und einer der zweiten Temperaturen liegt.

Die erste Kalibrierkurve, die mindestens eine zweite Kalibrierkurve sowie die mindestens eine dritte Kalibrierkurve werden bevorzugt in der Steuereinheit des Sensors vorgehalten. Weiterhin ist es bevorzugt, dass die Steuereinheit derart eingerichtet ist, dass für eine Abstandsmessung eine Kalibrierkurve gewählt und verwendet wird, deren zugeordnete erste, zweite oder dritte Temperatur der aktuellen Temperatur am nächsten kommt. Die aktuelle Temperatur kann beispielsweise über einen Temperaturdetektor ermittelt werden, der an die Steuereinheit angebunden ist. Anhand der ausgewählten Kalibierkurve werden die Messsignale des Sensors bevorzugt in der Steuereinheit in entsprechende Abstandswerte umgerechnet. Der Sensor ist bevorzugt derart eingerichtet, dass die bestimmten Abstandswerte von diesem ausgegeben werden können. Das kann beispielsweise durch eine Digitalanzeige erfolgen, die für einen Nutzer des Sensors ablesbar ist. Alternativ können die Abstandswerte als digitale Signale kodiert ausgegeben und beispielsweise von einem Computer verarbeitet werden.

Mit dem beschriebenen Verfahren kann insbesondere darauf verzichtet werden, den Sensor auf einer bestimmten Temperatur zu halten. Das wäre beispielsweise erforderlich, wenn lediglich die erste Kalibrierkurve aufgenommen würde beziehungsweise bekannt wäre. Ein derartiges Temperieren des Sensors wäre mit erheblichem Aufwand verbunden, der über das beschriebene Verfahren eingespart werden kann. Ein nach dem beschriebenen Verfahren kalibrierter Sensor kann bevorzugt zumindest innerhalb eines Temperaturbereichs ohne Einfluss der Temperatur und ohne dass eine Temperierung des Sensors vorgesehen werden muss betrieben werden. Der Temperaturbereich erstreckt sich bevorzugt zwischen den Extrema der ersten Temperatur und der mindestens einen zweiten Temperatur. Die mindestens eine dritte Temperatur liegt bevorzugt innerhalb der ersten Temperatur und der mindestens einen zweiten Temperatur. Alternativ ist es bevorzugt, dass zumindest eine der dritten Temperaturen außerhalb der Extrema der ersten Temperatur und der mindestens einen zweiten Temperatur liegt.

Liegt die Temperatur des Sensors innerhalb des beschriebenen Temperaturbereichs, kann der Sensor jedenfalls im Rahmen von Messungenauigkeiten und gegebenenfalls von Ungenauigkeiten der Bestimmung der mindestens einen dritten Kalibrierkurve genaue Abstandswerte ausgeben. Es genügt also, den Sensor derart zu temperieren, dass die Temperatur des Sensors innerhalb des beschriebenen Temperaturbereichs liegt. Dies kann mit geringem Aufwand erreicht werden. Insbesondere kann eine ohnehin vorliegende Raumtemperatur bereits innerhalb des Temperaturbereichs liegen, so dass keine aktive Temperierung des Sensors nötig ist. Entsprechend können die erste Temperatur und die mindestens eine zweite Temperatur sowie die Zahl der zweiten Kalibrierkurven so gewählt werden, dass sich ein möglichst breiter Temperaturbereich ergibt und/oder dass sich genügend Stützstellen für eine stabile Interpolation der dritten Kalibrierkurven ergibt.

In einer bevorzugten Ausführungsform des Verfahrens wird die mindestens eine dritte Kalibrierkurve durch eine Regression einer mathematischen Funktion zwischen der ersten und der mindestens einen zweiten Kalibrierkurve bestimmt.

Unter einer Regression wird hier eine Anpassung einer mathematischen Funktion an eine Mehrzahl von Punkten verstanden. Beispielsweise können die Punkte hier jeweils einen Wert des Messsignales des Sensors, eine Temperatur und einen zugehörigen Abstandswert umfassen. In dem Fall wird durch die Regression eine zweidimensionale mathematische Funktion an die Punkte angepasst.

Alternativ kann beispielsweise für eine Mehrzahl von diskreten Werten des Messsignals eine eindimensionale mathematische Funktion angepasst werden.

Als mathematische Funktion kommt hier insbesondere ein Polynom, eine Spline-Funktion oder eine durch Fourier-Synthese erhaltene Funktion in Betracht. Auch kann eine Kombination verschiedener mathematischer Funktionen verwendet werden. Beispielsweise können für verschiedene Werte des Messsignals des Sensors verschiedene mathematische Funktionen verwendet werden.

In dieser Ausführungsform können auch große Lücken zwischen benachbarten Kalibrierkurven überbrückt werden. Daher ist das Verfahren gemäß dieser Ausführungsform insbesondere dann bevorzugt, wenn nur eine geringe Anzahl an Kalibrierkurven aufgenommen wurde beziehungsweise bekannt ist.

In einer weiteren bevorzugten Ausführungsform des Verfahrens wird die mindestens eine dritte Kalibrierkurve durch eine lineare Interpolation zwischen der ersten und der mindestens einen zweiten Kalibrierkurve bestimmt.

Bevorzugt wird für eine Mehrzahl von verschiedenen Werten des Messsignals des Sensors jeweils eine lineare Interpolation durchgeführt. Das bedeutet, dass durch lineare Interpolation bevorzugt zwei Punkte verbunden werden, die grundsätzlich unterschiedliche Abstandswerte und unterschiedliche Temperaturen, aber gleiche Werte des Messsignals des Sensors aufweisen.

Durch eine lineare Interpolation kann die mindestens eine dritte Kalibrierkurve besonders einfach bestimmt werden. Ein dafür benötigter Rechenaufwand kann daher besonders gering sein.

In dieser Ausführungsform können im Vergleich zu der zuvor beschriebenen Regression insbesondere kleinere Lücken zwischen benachbarten Kalibrierkurven überbrückt werden. Daher ist das Verfahren gemäß dieser Ausführungsform insbesondere dann bevorzugt, wenn eine große Anzahl an Kalibrierkurven aufgenommen wurde beziehungsweise bekannt ist.

In einer weiteren bevorzugten Ausführungsform des Verfahrens ist der Sensor als ein Liniensensor zur Messung eines Abstandsprofils zwischen dem Liniensensor und der Oberfläche ausgeführt, wobei das Abstandsprofil eine Mehrzahl von Abständen zwischen dem Liniensensor und verschiedenen Messstellen der Oberfläche umfasst, und wobei die Kalibrierkurven des Liniensensors zweidimensionale Funktionen des Abstands zwischen dem Liniensensor und der Oberfläche in Abhängigkeit von einem Messsignal und von den Messstellen sind.

Der Liniensensor umfasst bevorzugt einen Linienlaser. Ein Linienlaser ist dazu bestimmt und eingerichtet, einen Laserstrahl auszusenden, der nicht punktförmig, sondern linienförmig ist. Mit einem solchen linienförmigen Laserstrahl kann der Abstand zwischen der Oberfläche und dem Liniensensor an einer Mehrzahl von Messstellen der Oberfläche gleichzeitig gemessen werden. Bevorzugt liegen die Messstellen auf einer gemeinsamen Linie. Die Abhängigkeit der Kalibrierkurven von den Messstellen ist bevorzugt diskret. Die Kalibrierkurven können in dem Fall auch als Kurvenscharen von eindimensionalen Kalibrierkurven betrachtet werden, die jeweils eindimensionale Funktionen des Abstands zwischen dem Sensor und der Oberfläche in Abhängigkeit von einem Messsignal sind, wobei für jede Messstelle eine derartige eindimensionale Funktion vorgesehen ist. Die Messstellen können aber auch derart nah aneinander angeordnet sein, dass die Abhängigkeit der Kalibrierkurven von den Messstellen als kontinuierlich betrachtet werden kann. Auch kann beispielsweise durch Interpolation zwischen den Kurven einer Kurvenschar eine kontinuierliche zweidimensionale Funktion erhalten werden.

Bevorzugt weist der Liniensensor einen zweidimensionalen optischen Detektor auf. Der zweidimensionale optische Detektor kann gedanklich oder tatsächlich in einzelne Detektorabschnitte unterteilt sein. Jeder der Detektorabschnitte kann als ein eindimensionaler optischer Detektor betrachtet werden, mit dem der Abstand zwischen dem Liniensensor und einer jeweiligen der Messstellen gemessen werden kann. Bevorzugt ist jeder Messstelle genau ein Detektorabschnitt zugeordnet.

Zur Kalibrierung des Liniensensors werden bevorzugt für jeden der Detektorabschnitte jeweils erste, zweite und dritte Kalibrierkurven als eindimensionale Funktionen bereitgestellt beziehungsweise bestimmt. Aus der Gesamtheit der so für einen Detektorabschnitt erhaltenen eindimensionalen ersten, zweiten und dritten Kalibrierkurven können jeweilige erste, zweite und dritte Kalibrierkurven für den Liniensensor als zweidimensionale Kalibrierkurve erhalten werden.

In einer weiteren bevorzugten Ausführungsform des Verfahrens wird in Schritt c) eine zweidimensionale Kalibrierkurve als Funktion des Abstandes zwischen dem Sensor und der Oberfläche in Abhängigkeit von einem Messsignal des Sensors und von der Temperatur bestimmt.

Die erste Kalibrierkurve, die mindestens eine zweite Kalibrierkurve und die mindestens eine dritte Kalibrierkurve werden gemäß dieser Ausführungsform bevorzugt in die zweidimensionale Kalibrierkurve umgeformt. Die zweidimensionale Kalibrierkurve umfasst bevorzugt für jede Kombination aus einem Wert des Messsignales des Sensors und einer Temperatur einen jeweiligen Abstandswert. Insbesondere durch Zusammenfassen der Kalibrierkurven zu der zweidimensionalen Kalibrierfläche können mit dem Sensor temperaturunabhängige Abstandwerte erhalten werden. Die zweidimensionale Kalibrierkurve wird bevorzugt in der Steuereinheit gespeichert.

In einer weiteren bevorzugten Ausführungsform des Verfahrens wird die in Schritt a) und b) verwendete Temperatur in einem Gehäuse des Sensors vorgegeben und gemessen.

Die für die Kalibrierung (und während der Messung) verwendete Temperatur ist bevorzugt die Lufttemperatur innerhalb des Gehäuses des Sensors. Diese Temperatur kann als ein empirisches Maß für die Temperatur betrachtet werden, die das Messsignal des Sensors tatsächlich beeinflusst. Die Details des Temperatureinflusses und insbesondere auch eine Temperaturverteilung innerhalb des Gehäuses des Sensors können bevorzugt vernachlässigt werden.

Zur Messung der Temperatur weist der Sensor bevorzugt einen Temperaturdetektor innerhalb des Gehäuses auf. Bevorzugt wird für die Kalibrierung der gleiche Temperaturdetektor in der gleichen Position verwendet, mit dem auch bei einer Abstandsmessung die Temperatur gemessen wird. Der Temperaturdetektor ist bevorzugt mit der Steuereinheit verbunden.

Die Temperatur des Sensors wird zur Kalibrierung bevorzugt durch eine externe Vorrichtung zur Temperatureinstellung vorgegeben, also eingestellt. Die externe Vorrichtung kann beispielsweise eine Heizung und/oder eine Kühlvorrichtung sein. Während der Kalibrierung gemäß dem beschriebenen Verfahren wird die Temperatur innerhalb des Sensors bevorzugt derart verändert, dass die Kalibrierkurven bei den verschiedenen ersten und zweiten Temperaturen aufgenommen werden können.

In einer weiteren bevorzugten Ausführungsform des Verfahrens wird die Messung des Abstandes zwischen dem Sensor und der Oberfläche mit mindestens einem Laser durchgeführt.

Der Sensor umfasst bevorzugt den mindestens einen Laser. Der Laser ist bevorzugt derart innerhalb des Gehäuses des Sensors angeordnet, dass ein von dem Laser ausgehender Laserstrahl insbesondere senkrecht oder zumindest nahezu senkrecht auf die Oberfläche auftrifft. Weiterhin ist es bevorzugt, dass der Sensor einen optischen Detektor umfasst, um von der Oberfläche reflektiertes Licht des Lasers, insbesondere Streulicht, aufzunehmen. Das von dem optischen Detektor ausgegebene Signal ist das Messsignal des Sensors. Dabei kann es sich beispielsweise um eine Pixelnummer handeln, die eine Position eines Schwerpunkts des reflektierten Streulichts angibt. Diese Pixelnummer kann insbesondere aus einer gemessenen Verteilung einer Lichtintensität über eine Mehrzahl von Pixeln ermittelt werden, wobei diese Pixelnummer auch durch mathematische Berechnungen bestimmt werden kann, und dadurch insbesondere auch einen nicht-ganzzahligen Wert darstellen kann. Die Position des Schwerpunktes kann insbesondere von dem Abstand zwischen dem Sensor und der Oberfläche abhängen. Eine derartige Messung eines Abstands zwischen einem Sensor und einer Oberfläche kann als Lasertriangulation bezeichnet werden.

Als weiterer Aspekt der Erfindung wird ein Verfahren zur Messung eines Abstands zwischen einem Sensor und einer Oberfläche bei der Herstellung von Platten oder Bandmaterialien vorgestellt. Für den Sensor ist für zumindest eine erste Temperatur und mindestens eine zweite Temperatur jeweils eine Kalibrierkurve bekannt. Das Verfahren umfasst zumindest die folgenden Verfahrensschritte:
A) Messen einer aktuellen Temperatur des Sensors;
B) Vergleichen der in Schritt A) gemessenen Temperatur mit der ersten Temperatur und mit der mindestens einen zweiten Temperatur;
C) Festlegen einer Kalibrierkurve anhand des Vergleichs aus Schritt B), wobei aus der ersten und der mindestens einen zweiten Kalibrierkurve eine dritte Kalibrierkurve festgelegt wird, sofern die in Schritt A) gemessene aktuelle Temperatur von der ersten und von der mindestens einen zweiten Temperatur abweicht;
D) Aufnehmen eines Messsignals des Sensors; und
E) Ermitteln des Abstands zwischen dem Sensor und der Oberfläche aus dem Messsignal des Sensors unter Verwendung der in Schritt C) festgelegten Kalibrierkurve.

Die weiter oben beschriebenen besonderen Vorteile und Ausgestaltungsmerkmale des Verfahrens zur Kalibrierung des Sensors zur Messung des Abstandes zwischen dem Sensor und der Oberfläche sind auf das beschriebene Verfahren zur Messung des Abstands zwischen dem Sensor und der Oberfläche anwendbar und übertragbar, und umgekehrt.

Die Schritte A) bis E) werden bevorzugt in der angegebenen Reihenfolge durchlaufen.

In Schritt A) wird die Temperatur bevorzugt mit dem Temperaturdetektor innerhalb des Gehäuses des Sensors gemessen. Dabei ist bevorzugt, dass die Temperaturwerte der bekannten Kalibrierkurven mit dem gleichen Temperaturdetektor aufgenommen wurden.

Ergibt der Vergleich in Schritt B), dass die in Schritt A) gemessene aktuelle Temperatur des Sensors mit der ersten Temperatur oder mit einer der zweiten Temperaturen übereinstimmt, so wird in Schritt C) die entsprechende erste Kalibrierkurve beziehungsweise zweite Kalibrierkurve als die in Schritt E) zu verwendende Kalibrierkurve festgelegt. Unter der Festlegung einer Kalibrierkurve wird verstanden, dass eine bereits bekannte Kalibrierkurve, die vorgehalten wird, geladen wird oder dass eine dritte Kalibrierkurve verwendet wird, die entweder geladen oder neu berechnet wird. Das bedeutet, dass eine bekannte Kalibrierkurve in Schritt E) verwendet wird, sofern die aktuelle Temperatur mit der dieser bekannten Kalibrierkurve zugeordneten Temperatur übereinstimmt. Eine Berechnung einer dritten Kalibierkurve findet in dem Fall nicht statt. Schritt C) umfasst in dem Fall insbesondere das Entscheiden, keine entsprechende Berechnung durchzuführen.

Bevorzugt wird in Schritt C) auch in dem Fall eine der bereits bekannten ersten oder zweiten Kalibrierkurven festgelegt, wenn die aktuelle Temperatur nicht genau der entsprechenden ersten beziehungsweise zweiten Temperatur entspricht, von dieser aber um nicht mehr als einen vorgebbaren Grenzwert abweicht. Das bedeutet, dass eine bereits bekannte Kalibrierkurve festgelegt wird, sofern die aktuelle Temperatur der dieser Kalibrierkurve zugeordneten Temperatur jedenfalls im Rahmen des vorgebbaren Grenzwertes nahe ist.

Sollte hingegen für die aktuelle Temperatur keine erste oder zweite Kalibrierkurve bekannt sein, so wird bevorzugt für diese Temperatur eine dritte Kalibrierkurve aus den bekannten ersten und zweiten Kalibrierkurven festgelegt. Unter der Festlegung einer dritten Kalibrierkurve wird verstanden, dass eine bereits berechnete dritte Kalibrierkurve, die vorgehalten wird, geladen wird oder dass eine dritte Kalibrierkurve neu berechnet wird.

Sofern in Schritt C) eine dritte Kalibrierkurve bestimmt wird, so erfolgt dies bevorzugt wie in Schritt c). Im Unterschied zu Schritt c) wird dabei in Schritt C) lediglich die dritte Kalibrierkurve bestimmt und festgelegt, die entsprechend der aktuellen Temperatur tatsächlich benötigt wird. Bevorzugt ist Schritt C) so ausgestaltet, dass zunächst diejenigen ersten oder zweiten Temperaturen bestimmt werden, die der in Schritt A) gemessenen aktuellen Temperatur möglichst nahe kommen. Anschließend wird bevorzugt mit den diesen Temperaturen zugeordneten ersten beziehungsweise zweiten Kalibrierkurven die dritte Kalibrierkurve bestimmt und festgelegt, die für Schritt E) verwendet wird. Alternativ können auch mehr als zwei und insbesondere auch alle der bekannten ersten und zweiten Kalibrierkurven bei der Bestimmung der dritten Kalibrierkurve berücksichtigt werden.

Mit dem beschriebenen Verfahren kann insbesondere auch eine Messung einer Dicke und/oder einer Oberflächenkrümmung eines Bauteils durchgeführt werden.

Bei einer unebenen Oberfläche, insbesondere bei einem Gewebe, kann ein Abstand zu der Oberfläche (bzw. eine Dicke eines Bauteils und/oder eine Krümmung einer Oberfläche) dadurch ermittelt werden, dass ein räumlich gemittelter Wert verwendet wird.

In einer bevorzugten Ausführungsform des Verfahrens wird die Messung des Abstands zwischen dem Sensor und der Oberfläche nach Art einer Lasertriangulation durchgeführt.

In einer bevorzugten Ausführungsform des Verfahrens erfolgt zumindest zeitweise eine Kühlung, sofern die in Schritt A) gemessene Temperatur oberhalb einer vorgebbaren Grenztemperatur liegt.

Vorzugsweise erfolgt die Kühlung derart, dass zumindest der Sensor gekühlt wird. Alternativ oder zusätzlich ist es bevorzugt, dass eine Halterung, an der der Sensor gehalten ist, gekühlt wird. Beispielsweise können Kühlleitungen in der Nähe des Sensors und/oder innerhalb der Halterung mit temperiertem Wasser durchströmt werden.

Die Grenztemperatur liegt vorzugsweise im Bereich zwischen 40 °C und 70 °C [Grad Celsius], insbesondere zwischen 45 °C und 55 °C und besonders bevorzugt bei 45 °C. Eine derart hohe Temperatur des Sensors kann insbesondere aufgrund einer Temperatur der Oberfläche von beispielsweise 300 °C entstehen. Derartige und auch noch höhere Oberflächentemperaturen treten beispielsweise bei der Herstellung von Metallplatten regelmäßig auf.

Die Kühlung erfolgt vorzugsweise über den gesamten Zeitraum, in dem die Grenztemperatur überschritten ist. Dabei kann vorgesehen sein, dass die Überschreitung der Grenztemperatur überwacht wird und dass die Kühlung automatisch bei Überschreitung der Grenztemperatur einsetzt. Bei Unterschreiten der Grenztemperatur kann vorgesehen sein, dass die Kühlung automatisch wieder ausgesetzt wird.

Alternativ ist es aber auch möglich, die Kühlung für eine gesamte Betriebsdauer dauerhaft vorzusehen, sofern davon auszugehen ist, dass die Grenztemperatur im Betrieb dauerhaft oder zumindest zu einem überwiegenden Anteil der Betriebsdauer überschritten wird. In dem Fall ist muss ein Überschreiten oder ein Unterschreiten der Grenztemperatur nicht überwacht werden.

Das beschriebene Verfahren bietet insbesondere den Vorteil, dass die Kühlung nicht in bekanntem Maße erfolgen muss. Es ist durch das beschriebene Verfahren nicht erforderlich, dass die Temperatur des Sensors auf einen bestimmten Wert geregelt ist. Es genügt also, dass die Temperatur des Sensors durch die Kühlung gemäß der vorliegenden Ausführungsform unter die Grenztemperatur gebracht wird.

Die Grenztemperatur ist vorzugsweise derart festgelegt, dass unterhalb der Grenztemperatur eine Messung des Abstands zwischen dem Sensor und der Oberfläche mit einer gewünschten Genauigkeit möglich ist. Liegt die Temperatur des Sensors oberhalb der Grenztemperatur und damit außerhalb des Bereichs, in dem eine gewünschte Genauigkeit erreicht werden kann, kann die Temperatur durch die vorliegende Ausführungsform wieder in den Bereich gebracht werden, in dem die gewünschte Genauigkeit erreichbar ist. Dabei genügt es, dass die Temperatur in diesen Bereich gebracht wird. Ein genauer Wert innerhalb dieses Bereichs muss nicht eingestellt werden.

Als ein weiterer Aspekt wird ein Verfahren zur Messung einer Dicke und/oder einer Oberflächenkrümmung einer Platte oder eines Bandmaterials vorgestellt, bei dem mit mindestens einem Sensor gemäß dem beschriebenen Verfahren ein Abstand zwischen dem jeweiligen Sensor und einer Oberfläche der Platte oder des Bandmaterials bei deren beziehungsweise dessen Herstellung gemessen wird.

Die weiter oben beschriebenen besonderen Vorteile und Ausgestaltungsmerkmale des Verfahrens zur Kalibrierung des Sensors zur Messung des Abstandes zwischen dem Sensor und der Oberfläche und des Verfahrens zur Messung des Abstands zwischen dem Sensor und der Oberfläche sind auf das beschriebene Verfahren zur Messung einer Dicke und/oder einer Oberflächenkrümmung eines Bauteils anwendbar und übertragbar, und umgekehrt.

Zur Messung der Dicke wird bevorzugt ein erster Sensor oberhalb einer Oberseite des Bauteils angeordnet und ein zweiter Sensor unterhalb einer der Oberseite gegenüberliegenden Unterseite des Bauteils. Ist der Abstand zwischen den beiden Sensoren bekannt, so ergibt die Differenz aus diesem Abstand und den beiden Abständen zwischen den Sensoren und den entsprechenden Oberflächen die Dicke des Bauteils. Es ist auch möglich, die Dicke eines Bauteils nur mit einem einzigen Sensor zu messen. Das ist beispielsweise dann möglich, wenn die Position der Unterseite des Bauteils bekannt ist, so dass aus der Position der Oberseite des Bauteils auf die Dicke des Bauteils geschlossen werden kann.

Das kann beispielsweise bei der Herstellung von Stahlplatten, insbesondere innerhalb einer Produktionsline ("inline"), durchgeführt werden. Die Krümmung einer Oberfläche kann mit einem einzelnen Sensor auf einer Seite der Oberfläche gemessen werden.

In einer bevorzugten Ausführungsform des Verfahrens ist das Bauteil ein Bandmaterial umfassend zumindest eines der folgenden Materialien:
- Metall,
- Kunststoff,
- Carbon,
- Glas,
- Polymethylmethacrylat (PMMA)
- Polycarbonat,
- Gewebe.

Die Erfindung und das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen schematisch:
- Fig. 1:: eine Anordnung zur Messung eines Abstands zwischen einem Sensor und einer Oberfläche, und
- Fig. 2:: eine Darstellung von Kalibrierkurven als jeweilige Funktionen des Abstands zwischen dem Sensor aus Fig. 1 und der Oberfläche in Abhängigkeit von einem Messsignal, und
- Fig. 3:: eine Darstellung eines weiteren Ausführungsbeispiels, in dem der Sensor als ein Liniensensor ausgeführt ist.

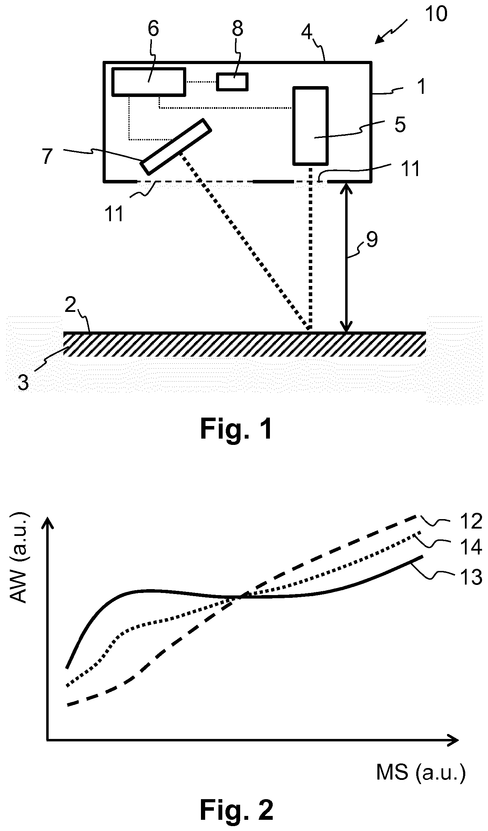

Fig. 1 zeigt eine Anordnung 10 zur Messung eines Abstands 9 zwischen einem Sensor 1 und einer Oberfläche 2 eines Bauteils 3. Die Anordnung 10 umfasst den Sensor 1 und eine Steuereinheit 6, die dazu bestimmt und eingerichtet ist, ein Verfahren zur Messung des Abstands 9 zwischen dem Sensor 1 und der Oberfläche 2 durchzuführen.

Dazu ist für den Sensor 1 zumindest für eine erste Temperatur und mindestens eine zweite Temperatur jeweils eine Kalibrierkurve bekannt. Mit einem Temperaturdetektor 8 innerhalb eines Gehäuses 4 des Sensors 1 kann eine aktuelle Temperatur des Sensors 1 gemessen werden. Für die so gemessene Temperatur wird eine Kalibrierkurve des Sensors 1 festgelegt. Dazu kann entweder eine der bekannten ersten, zweiten oder dritten Kalibrierkurven verwendet werden oder, sofern für die aktuelle Temperatur keine Kalibrierkurve bekannt ist, aus der ersten und der mindestens einen zweiten Kalibrierkurve eine dritte Kalibrierkurve bestimmt werden. Unter Verwendung der so festgelegten Kalibrierkurve kann aus einem Messsignal des Sensors 1 der Abstand 9 zwischen dem Sensor 1 und der Oberfläche 2 ermittelt werden. Die Messung des Abstands 9 zwischen dem Sensor 1 und der Oberfläche 2 wird nach Art einer Lasertriangulation durchgeführt. Dazu weist der Sensor 1 einen Laser 5 auf, der einen Laserstrahl aussenden kann, der senkrecht auf die Oberfläche 2 auftrifft. Mit einem optischen Detektor 7 kann insbesondere Streulicht des Lasers 5 detektiert werden. Der optische Detektor 7 ist dazu eingerichtet, das Messsignal des Sensors 1 aufzunehmen und auszugeben. Sowohl der Laser 5 als auch der optische Detektor 7 sind mit einer Steuereinheit 6 verbunden. Auch der Temperaturdetektor 8 ist an die Steuereinheit 6 angebunden. Das ist durch gepunktete Linien dargestellt, die entsprechende Kabel andeuten. Für den Laser 5 und für den optischen Detektor 7 weist das Gehäuse 4 des Sensors 1 jeweils ein Fenster 11 auf, durch das Licht des Lasers 5 aus dem Gehäuse 4 austreten beziehungsweise in dieses eintreten kann.

Alternativ kann der beschriebene Sensor 1 auch derart kalibriert werden, dass eine Bestimmung einer Kalibrierkurve in Abhängigkeit von der aktuellen Temperatur nicht nötig ist. Dazu werden zunächst eine erste Kalibrierkurve und mindestens eine zweite Kalibrierkurve bereitgestellt und aus diesen mindestens eine dritte Kalibrierkurve bestimmt. Das kann insbesondere durch eine Regression einer mathematischen Funktion und/oder durch eine lineare Interpolation zwischen der ersten und der mindestens einen zweiten Kalibrierkurve erfolgen. Auch kann eine zweidimensionale Kalibrierkurve als Funktion des Abstandes 9 zwischen dem Sensor 1 und der Oberfläche 2 in Abhängigkeit von einem Messsignal des Sensors 1 und von der Temperatur bestimmt werden. Die mindestens eine dritte Kalibrierkurve und/oder die zweidimensionale Kalibrierkurve können insbesondere in der Steuereinheit 6 gespeichert sein und vorgehalten werden.

Fig. 2 zeigt eine erste Kalibrierkurve 12, eine zweite Kalibrierkurve 13 und eine dritte Kalibrierkurve 14 als jeweilige Funktionen des Abstands 9 zwischen dem Sensor 1 und der Oberfläche 2 in Abhängigkeit von einem Messsignal. Die Kalibrierkurven 12, 13, 14 sind solche, die für den Sensor 1 aus Fig. 1 erhalten beziehungsweise verwendet werden können. Der Abstand 9 ist in Fig. 2 als Abstandswerte AW auf der Hochachse aufgetragen. Das Messsignal MS ist auf der Rechtsachse aufgetragen. Alle Größen sind in beliebigen Einheiten ("a.u.") dargestellt. Die Verläufe der Kalibrierkurven 12, 13, 14 sind lediglich beispielhaft und schematisch und dienen der prinzipiellen Beschreibung des Verfahrens. Zu erkennen ist insbesondere, dass die dritte Kalibrierkurve 14 zwischen der ersten Kalibrierkurve 12 und der zweiten Kalibrierkurve 13 verläuft.

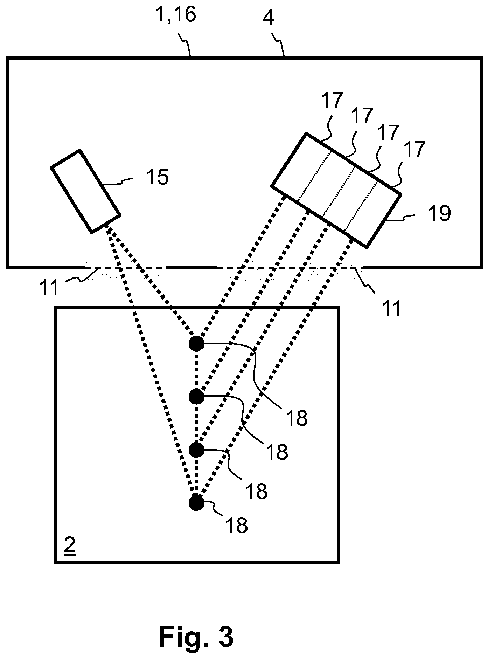

Fig. 3 zeigt eine schematische, teilweise dreidimensionale Darstellung eines weiteren Ausführungsbeispiels, in dem ein Sensor 1 als ein Liniensensor 16 zur Messung eines Abstandsprofils zwischen dem Liniensensor 16 und einer Oberfläche 2 ausgeführt ist. Der Liniensensor 16 umfasst einen Linienlaser 15. Das Abstandsprofil umfasst in diesem Beispiel Abstände zwischen dem Liniensensor 16 und vier verschiedenen Messstellen 18 der Oberfläche 2. Die Kalibrierkurven des Liniensensors 16 sind zweidimensionale Funktionen des Abstands zwischen dem Liniensensor 16 und der Oberfläche 2 in Abhängigkeit von einem Messsignal und von den Messstellen 18. Das bedeutet, dass eine Kalibrierkurve eine Kurvenschar von jeweils vier eindimensionalen Kurven umfasst, wobei jeder Messstelle 18 eine jeweilige der eindimensionalen Kurven zugeordnet ist. Der Liniensensor 16 umfasst einen zweidimensionalen optischen Detektor 19, der entsprechend der Anzahl an Messstellen 18 (gedanklich) in vier Detektorabschnitte 17 unterteilt werden kann. Jeder der Detektorabschnitte 17 kann als ein jeweiliger eindimensionaler optischer Detektor betrachtet werden, der zur Messung eines Abstandes zwischen dem Liniensensor 16 und einer jeweiligen der Messstellen 18 bestimmt und eingerichtet ist. Auch in diesem Ausführungsbeispiel umfasst der Liniensensor 16 ein Gehäuse 4 mit Fenstern 11 insbesondere für das Laserlicht. Der Übersichtlichkeit halber sind in dieser Darstellung keine Steuereinheit, kein Temperaturdetektor und keine Kabel gezeigt.

Mit den beschriebenen Verfahren und der beschriebenen Anordnung 10 kann ein Abstand zwischen einem Sensor 1 und einer Oberfläche 2 temperaturunabhängig gemessen werden. Dabei kann auch die Dicke eines Bauteils 3 gemessen werden. Der Sensor 1 muss nicht durch aufwendiges Temperieren auf eine bestimmte Temperatur gebracht und auf dieser gehalten werden.

### Bezugszeichenliste

- 1: Sensor
- 2: Oberfläche
- 3: Bauteil
- 4: Gehäuse
- 5: Laser
- 6: Steuereinheit
- 7: optischer Detektor
- 8: Temperaturdetektor
- 9: Abstand
- 10: Anordnung
- 11: Fenster
- 12: erste Kalibrierkurve
- 13: zweite Kalibrierkurve
- 14: dritte Kalibrierkurve
- 15: Linienlaser
- 16: Liniensensor
- 17: Detektorabschnitt
- 18: Messstelle
- 19: zweidimensionaler optischer Detektor

## Patentansprüche

1. Verfahren zur Kalibrierung eines Sensors (1) zur Messung eines Abstandes (9) zwischen dem Sensor (1) und einer Oberfläche (2), welches bei der Herstellung von Platten oder Bandmaterialien eingesetzt wird, und zumindest die folgenden Verfahrensschritte umfasst:
a) Bereitstellen einer ersten Kalibrierkurve (12) als eine Funktion des Abstands (9) zwischen dem Sensor (1) und der Oberfläche (2) in Abhängigkeit von zumindest einem Messsignal bei einer vorgegebenen und dieser ersten Kalibrierkurve (12) zugeordneten ersten Temperatur;
b) Bereitstellen mindestens einer zweiten Kalibrierkurve (13) als eine Funktion des Abstands (9) zwischen dem Sensor (1) und der Oberfläche (2) in Abhängigkeit von zumindest einem Messsignal bei einer vorgegebenen und dieser zweiten Kalibrierkurve (13) zugeordneten zweiten Temperatur, die sich von der ersten Temperatur und jeder anderen zweiten Temperatur unterscheidet;
c) Bestimmen mindestens einer dritten Kalibrierkurve (14) aus den in Schritt a) und b) erhaltenen ersten (12) und zweiten (13) Kalibrierkurven des Sensors (1) für mindestens eine dritte Temperatur, die von der ersten und jeder zweiten Temperatur verschieden ist.

2. Verfahren nach Anspruch 1, wobei die mindestens eine dritte Kalibrierkurve (14) durch eine Regression einer mathematischen Funktion zwischen der ersten (12) und der mindestens einen zweiten (13) Kalibrierkurve bestimmt wird.

3. Verfahren nach einem der vorhergehenden Ansprüche, wobei die mindestens eine dritte Kalibrierkurve (14) durch eine lineare Interpolation zwischen der ersten (12) und der mindestens einen zweiten (13) Kalibrierkurve bestimmt wird.

4. Verfahren nach einem der vorhergehenden Ansprüche, wobei der Sensor (1) als ein Liniensensor (16) zur Messung eines Abstandsprofils zwischen dem Liniensensor (16) und der Oberfläche (2) ausgeführt ist, wobei das Abstandsprofil eine Mehrzahl von Abständen zwischen dem Liniensensor (16) und verschiedenen Messstellen (18) der Oberfläche (2) umfasst, und wobei die Kalibrierkurven des Liniensensors (16) zweidimensionale Funktionen des Abstands zwischen dem Liniensensor (16) und der Oberfläche (2) in Abhängigkeit von einem Messsignal und von den Messstellen (18) sind.

5. Verfahren nach einem der Ansprüche 1 bis 3, wobei in Schritt c) eine zweidimensionale Kalibrierkurve als Funktion des Abstandes (9) zwischen dem Sensor (1) und der Oberfläche (2) in Abhängigkeit von einem Messsignal des Sensors (1) und von der Temperatur bestimmt wird.

6. Verfahren nach einem der vorhergehenden Ansprüche, wobei die in Schritt a) und b) verwendete Temperatur in einem Gehäuse (4) des Sensors vorgegeben und gemessen wird.

7. Verfahren nach einem der vorhergehenden Ansprüche, wobei die Messung des Abstandes (9) zwischen dem Sensor (1) und der Oberfläche (2) mit mindestens einem Laser (5) durchgeführt wird.

8. Verfahren zur Messung eines Abstands (9) zwischen einem Sensor (1) und einer Oberfläche (2) bei der Herstellung von Platten oder Bandmaterialien, wobei für den Sensor (1) für zumindest eine erste Temperatur und mindestens eine zweite Temperatur jeweils eine Kalibrierkurve (12, 13) bekannt ist, umfassend zumindest die folgenden Verfahrensschritte:
A) Messen einer aktuellen Temperatur des Sensors (1);
B) Vergleichen der in Schritt A) gemessenen Temperatur mit der ersten Temperatur und mit der mindestens einen zweiten Temperatur;
C) Festlegen einer Kalibrierkurve anhand des Vergleichs aus Schritt B), wobei aus der ersten (12) und der mindestens einen zweiten (13) Kalibrierkurve eine dritte Kalibrierkurve (14) festgelegt wird, sofern die in Schritt A) gemessene aktuelle Temperatur von der ersten und von der mindestens einen zweiten Temperatur abweicht;
D) Aufnehmen eines Messsignals des Sensors (1); und
E) Ermitteln des Abstands (9) zwischen dem Sensor (1) und der Oberfläche (2) aus dem Messsignal des Sensors (1) unter Verwendung der in Schritt C) festgelegten Kalibrierkurve.

9. Verfahren nach Anspruch 8, wobei die Messung des Abstands (9) zwischen dem Sensor (1) und der Oberfläche (2) nach Art einer Lasertriangulation durchgeführt wird.

10. Verfahren nach einem der Ansprüche 8 oder 9, wobei zumindest zeitweise eine Kühlung erfolgt, sofern die in Schritt A) gemessene Temperatur oberhalb einer vorgebbaren Grenztemperatur liegt.

11. Verfahren zur Messung einer Dicke und/oder einer Oberflächenkrümmung eines Bauteils, wobei das Bauteil eine Platte oder ein Bandmaterial ist, und wobei mit mindestens einem Sensor gemäß einem Verfahren nach einem der Ansprüche 8 bis 10 ein Abstand zwischen dem jeweiligen Sensor und einer Oberfläche des Bauteils gemessen wird.

12. Verfahren nach Anspruch 11, wobei das Bauteil ein Bandmaterial umfassend zumindest eines der folgenden Materialien ist:
- Metall,
- Kunststoff,
- Carbon,
- Glas,
- Polymethylmethacrylat (PMMA),
- Polycarbonat,
- Gewebe.

## Claims

1. Method for calibrating a sensor (1) for measuring a distance (9) between the sensor (1) and a surface (2), which method is used in the production of sheets or strip materials and comprises at least the following method steps:
a) providing a first calibration curve (12) as a function of the distance (9) between the sensor (1) and the surface (2) against at least one measurement signal at a predefined first temperature assigned to this first calibration curve (12);
b) providing at least one second calibration curve (13) as a function of the distance (9) between the sensor (1) and the surface (2) against at least one measurement signal at a predefined second temperature assigned to this second calibration curve (13), which second temperature differs from the first temperature and from any other second temperature;
c) determining at least one third calibration curve (14) from the first calibration curve (12) and second calibration curve (13) of the sensor (1) obtained in step a) and step b) for at least one third temperature that is different from the first and any second temperature.

2. Method according to claim 1, wherein the at least one third calibration curve (14) is determined by a regression of a mathematical function between the first calibration curve (12) and the at least one second calibration curve (13).

3. Method according to either of the preceding claims, wherein the at least one third calibration curve (14) is determined by a linear interpolation between the first calibration curve (12) and the at least one second calibration curve (13).

4. Method according to any of the preceding claims, wherein the sensor (1) is designed as a line sensor (16) for measuring a distance profile between the line sensor (16) and the surface (2), wherein the distance profile comprises a plurality of distances between the line sensor (16) and different measurement points (18) on the surface (2), and wherein the calibration curves of the line sensor (16) are two-dimensional functions of the distance between the line sensor (16) and the surface (2) against a measurement signal and the measurement points (18).

5. Method according to any of claims 1 to 3, wherein in step c) a two-dimensional calibration curve is determined as a function of the distance (9) between the sensor (1) and the surface (2) against a measurement signal from the sensor (1) and the temperature.

6. Method according to any of the preceding claims, wherein the temperature used in step a) and step b) is predefined and measured in a housing (4) of the sensor.

7. Method according to any of the preceding claims, wherein the distance (9) between the sensor (1) and the surface (2) is measured by means of at least one laser (5).

8. Method for measuring a distance (9) between a sensor (1) and a surface (2) during the production of sheets or strip materials, wherein, for the sensor (1), a calibration curve (12, 13) is known in each case for at least one first temperature and at least one second temperature, the method comprising at least the following method steps:
A) measuring a current temperature of the sensor (1);
B) comparing the temperature measured in step A) with the first temperature and with the at least one second temperature;
C) establishing a calibration curve on the basis of the comparison from step B), wherein a third calibration curve (14) is established from the first calibration curve (12) and the at least one second calibration curve (13), provided that the current temperature measured in step A) differs from the first temperature and from the at least one second temperature;
D) recording a measurement signal from the sensor (1); and
E) determining the distance (9) between the sensor (1) and the surface (2) from the measurement signal from the sensor (1) using the calibration curve established in step C).

9. Method according to claim 8, wherein the distance (9) between the sensor (1) and the surface (2) is measured in the manner of laser triangulation.

10. Method according to either claim 8 or claim 9, wherein cooling is carried out at least temporarily if the temperature measured in step A) is above a predefinable limit temperature.

11. Method for measuring a thickness and/or a surface curvature of a component, wherein the component is a sheet or a strip material, and wherein, by means of at least one sensor using a method according to any of claims 8 to 10, a distance between the relevant sensor and a surface of the component is measured.

12. Method according to claim 11, wherein the component is a strip material comprising at least one of the following materials:
- metal,
- plastics material,
- carbon,
- glass,
- polymethyl methacrylate (PMMA),
- polycarbonate,
- fabric.

## Revendications

1. Procédé destiné à l'étalonnage d'un capteur (1) en vue de mesurer une distance (9) entre le capteur (1) et une surface (2), lequel procédé est utilisé lors de la production de plaques ou de matériaux en bande, et comprend au moins les étapes de procédé suivantes :
a) fourniture d'une première courbe d'étalonnage (12) en tant que fonction de la distance (9) entre le capteur (1) et la surface (2) en fonction d'au moins un signal de mesure à une première température prédéfinie associée à ladite première courbe d'étalonnage (12) ;
b) fourniture d'au moins une deuxième courbe d'étalonnage (13) en tant que fonction de la distance (9) entre le capteur (1) et la surface (2) en fonction d'au moins un signal de mesure à une deuxième température prédéfinie associée à ladite deuxième courbe d'étalonnage (13), laquelle est différente de la première température et de toute autre deuxième température ;
c) détermination d'au moins une troisième courbe d'étalonnage (14) à partir des première (12) et deuxième (13) courbes d'étalonnage du capteur (1) obtenues aux étapes a) et b) pour au moins une troisième température différente de la première et de toute autre deuxième températures.

2. Procédé selon la revendication 1, dans lequel l'au moins une troisième courbe d'étalonnage (14) est déterminée par une régression d'une fonction mathématique entre la première (12) et l'au moins une deuxième (13) courbes d'étalonnage.

3. Procédé selon l'une des revendications précédentes, dans lequel l'au moins une troisième courbe d'étalonnage (14) est déterminée par une interpolation linéaire entre la première (12) et l'au moins une deuxième (13) courbes d'étalonnage.

4. Procédé selon l'une des revendications précédentes, dans lequel le capteur (1) est conçu en tant que capteur linéaire (16) et permet de mesurer un profil de distance entre le capteur linéaire (16) et la surface (2), le profil de distance comprenant une pluralité de distances entre le capteur linéaire (16) et différents points de mesure (18) de la surface (2), et les courbes d'étalonnage du capteur linéaire (16) étant des fonctions bidimensionnelles de la distance entre le capteur linéaire (16) et la surface (2) en fonction d'un signal de mesure et des points de mesure (18).

5. Procédé selon l'une des revendications 1 à 3, dans lequel, à l'étape c), une courbe d'étalonnage bidimensionnelle est déterminée en tant que fonction de la distance (9) entre le capteur (1) et la surface (2) en fonction d'un signal de mesure du capteur (1) et de la température.

6. Procédé selon l'une des revendications précédentes, dans lequel la température utilisée aux étapes a) et b) est prédéfinie et mesurée dans un boîtier (4) du capteur.

7. Procédé selon l'une des revendications précédentes, dans lequel la mesure de la distance (9) entre le capteur (1) et la surface (2) est effectuée avec au moins un laser (5).

8. Procédé destiné à mesurer une distance (9) entre un capteur (1) et une surface (2) lors de la production de plaques ou de matériaux en bande, une courbe d'étalonnage (12, 13) étant respectivement connue pour au moins une première température et au moins une deuxième température pour le capteur (1), comprenant au moins les étapes de procédé suivantes :
A) mesure d'une température actuelle du capteur (1) ;
B) comparaison de la température mesurée à l'étape A) avec la première température et avec l'au moins une deuxième température ;
C) établissement d'une courbe d'étalonnage sur la base de la comparaison à l'étape B), une troisième courbe d'étalonnage (14) étant établie à partir de la première (12) et de l'au moins une deuxième (13) courbes d'étalonnage, à condition que la température actuelle mesurée à l'étape A) diffère de la première et de l'au moins une deuxième températures ;
D) enregistrement d'un signal de mesure du capteur (1) ; et
E) évaluation de la distance (9) entre le capteur (1) et la surface (2) à partir du signal de mesure du capteur (1) à l'aide de la courbe d'étalonnage établie à l'étape C).

9. Procédé selon la revendication 8, dans lequel la mesure de la distance (9) entre le capteur (1) et la surface (2) s'effectue à la manière d'une triangulation laser.

10. Procédé selon l'une des revendications 8 ou 9, dans lequel un refroidissement est effectué au moins temporairement, à condition que la température mesurée à l'étape A) soit supérieure à une température limite prédéfinissable.

11. Procédé destiné à mesurer une épaisseur et/ou une courbure de surface d'un composant, le composant étant une plaque ou un matériau en bande, et une distance entre le capteur respectif et une surface du composant étant mesurée avec au moins un capteur selon un procédé selon l'une des revendications 8 à 10.

12. Procédé selon la revendication 11, dans lequel le composant est un matériau en bande comprenant au moins l'un des matériaux suivants :
- métal,
- plastique,
- carbone,
- verre,
- polyméthacrylate de méthyle (PMMA),
- polycarbonate,
- tissu.
